# EUROPEAN PATENT APPLICATION

(11) **EP 4 837 805 A1**
(43) Date of publication of application: **11.11.2026**
(21) Application number: 25769735.9
(22) Date of filing: 13.03.2025
(51) Int. Cl.: B60W 40/00

(54) **ADHESION COEFFICIENT DETERMINATION METHOD AND APPARATUS, VEHICLE, MEDIUM, AND PROGRAM PRODUCT**

(30) Priority: 15.03.2024 CN 202410301423
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: SUN, Yuhang, Hangzhou Bay New District, Ningbo, Zhejiang 315336 (CN); CHEN, Wenwu, Hangzhou Bay New District, Ningbo, Zhejiang 315336 (CN); LIU, Jingjing, Hangzhou Bay New District, Ningbo, Zhejiang 315336 (CN); MENG, Xiangke, Hangzhou Bay New District, Ningbo, Zhejiang 315336 (CN); WANG, Zhenlong, Hangzhou Bay New District, Ningbo, Zhejiang 315336 (CN); JIN, Changming, Hangzhou Bay New District, Ningbo, Zhejiang 315336 (CN)
(74) Representative: Boult Wade Tennant LLP
(86) International application number: PCT/CN2025/082418
(87) International publication number: WO 2025/190357

(57) **Abstract**

Disclosed herein are an adhesion coefficient determination method and apparatus, a vehicle, a medium, and a program product. The method includes: acquiring tire information of each tire of a vehicle, where the tire information includes a tire longitudinal force, a tire lateral force, and a tire vertical load of the tire; determining a first adhesion coefficient of the vehicle according to the tire information of each tire; determining a gain coefficient according to the first adhesion coefficient and the tire information of each tire; determining a second adhesion coefficient according to the gain coefficient and an acceleration of the vehicle; and determining a target adhesion coefficient of the vehicle according to the first adhesion coefficient and the second adhesion coefficient. The method of the embodiments of the present application improves the accuracy of determining the target adhesion coefficient of the vehicle, and allows the target adhesion coefficient of the vehicle to match actual conditions, thereby improving anti-slip control of the vehicle and enhancing the safety of occupants.

## Description

This application claims priority to Chinese patent application No. 202410301423.0, filed with the China National Intellectual Property Administration on March 15, 2024, and entitled "ADHESION COEFFICIENT DETERMINATION METHOD AND APPARATUS, VEHICLE, MEDIUM, AND PROGRAM PRODUCT", which is hereby incorporated by reference in its entirety.

### TECHNICAL FIELD

Embodiments of the present application relate to, but are not limited to, the technical field of vehicles, and in particular, to an adhesion coefficient determination method and apparatus, a vehicle, a medium, and a program product.

### BACKGROUND

An adhesion coefficient of a vehicle plays a key role in implementing longitudinal drive anti-slip control of the vehicle. Therefore, it is crucial for anti-slip control of the vehicle to accurately determine the adhesion coefficient of the vehicle.

### SUMMARY

The following is a summary of the subject matter described in detail herein. This summary is not intended to limit the scope of the claims.

Embodiments of the present application provide an adhesion coefficient determination method and apparatus, a vehicle, a medium, and a program product. The accuracy of determining the adhesion coefficient is increased, and the matching degree between the adhesion coefficient and the actual condition of the vehicle is enhanced, thereby improving the anti-slip control of the vehicle and enhancing the safety of occupants.

In a first aspect, an embodiment of the present application provides an adhesion coefficient determination method, applied to a vehicle, and the method includes:
acquiring tire information of each tire of the vehicle, where the tire information includes a tire longitudinal force, a tire lateral force, and a tire vertical load of the tire;
determining a first adhesion coefficient of the vehicle according to the tire information of each tire;
determining a gain coefficient according to the first adhesion coefficient and the tire information of each tire;
determining a second adhesion coefficient according to the gain coefficient and an acceleration of the vehicle; and
determining a target adhesion coefficient of the vehicle according to the first adhesion coefficient and the second adhesion coefficient.

In an implementation, the determining the first adhesion coefficient of the vehicle according to the tire information of each tire includes:
for any tire, determining an adhesion coefficient of the tire according to tire information of the tire; and
determining the first adhesion coefficient according to the adhesion coefficient of each tire.

In an implementation, the determining the first adhesion coefficient according to the adhesion coefficient of each tire includes:
determining whether a stability control system of the vehicle is activated; and
if yes, calculating the first adhesion coefficient according to the adhesion coefficient of each tire, the tire longitudinal force and the tire lateral force corresponding to each tire;
if no, determining a turning state of the vehicle, and determining the first adhesion coefficient according to the turning state and the adhesion coefficient of each tire.

In an implementation, the calculating the first adhesion coefficient according to the adhesion coefficient of each tire, the tire longitudinal force and the tire lateral force corresponding to each tire includes:
determining a total adhesion coefficient as a sum of adhesion coefficients of each tire;
determining a target force of the vehicle on a horizontal plane according to the tire longitudinal force and the tire lateral force corresponding to each tire; and
determining the first adhesion coefficient as a ratio of the total adhesion coefficient to the target force.

In an implementation, the determining the first adhesion coefficient according to the turning state and the adhesion coefficient of each tire includes:
if the turning state is a left-turn state, determining the first adhesion coefficient as a maximum value of an adhesion coefficient of a right front tire and an adhesion coefficient of a right rear tire;
if the turning state is a right-turn state or a straight driving state, determining the first adhesion coefficient as a maximum value of an adhesion coefficient of a left front tire and an adhesion coefficient of a left rear tire.

In an implementation, the determining the gain coefficient according to the first adhesion coefficient and the tire information of each tire includes:
determining a total tire adhesion coefficient of the vehicle according to the tire information of each tire;
determining a third adhesion coefficient as a product of the first adhesion coefficient and a preset number, where the preset number is the number of tires in the vehicle; and
determining the gain coefficient as a ratio of the third adhesion coefficient to the total tire adhesion coefficient.

In an implementation, the acceleration includes a longitudinal acceleration, a lateral acceleration, and a gravitational acceleration; the determining the second adhesion coefficient according to the gain coefficient and the acceleration of the vehicle includes:
determining a fourth adhesion coefficient according to the longitudinal acceleration, the lateral acceleration, and the gravitational acceleration; and
determining the second adhesion coefficient as a product of the gain coefficient and the fourth adhesion coefficient.

In an implementation, the determining the target adhesion coefficient of the vehicle according to the first adhesion coefficient and the second adhesion coefficient includes:
determining a first weight value for the first adhesion coefficient and a second weight value for the second adhesion coefficient according to vehicle information of the vehicle and/or the second adhesion coefficient; where the vehicle information includes at least one of the following: an actual yaw angle, a tire slip ratio, and a longitudinal vehicle speed; and
determining the target adhesion coefficient according to the first adhesion coefficient, the second adhesion coefficient, the first weight value, and the second weight value.

In a second aspect, an embodiment of the present application provides an adhesion coefficient determination apparatus, including:
an acquiring module, configured to acquire tire information of each tire of a vehicle, where the tire information includes a tire longitudinal force, a tire lateral force, and a tire vertical load of the tire; and
a processing module, configured to determine a first adhesion coefficient of the vehicle according to the tire information of each tire;
where the processing module is further configured to determine a gain coefficient according to the first adhesion coefficient and the tire information of each tire;
the processing module is further configured to determine a second adhesion coefficient according to the gain coefficient and an acceleration of the vehicle; and
the processing module is further configured to determine a target adhesion coefficient of the vehicle according to the first adhesion coefficient and the second adhesion coefficient.

In an implementation, the processing module is specifically configured to:
for any tire, determine an adhesion coefficient of the tire according to tire information of the tire; and
determine the first adhesion coefficient according to an adhesion coefficient of each tire.

In an implementation, the processing module is specifically configured to:
determine whether a stability control system of the vehicle is activated; and
if yes, calculate the first adhesion coefficient according to the adhesion coefficient of each tire, the tire longitudinal force and the tire lateral force corresponding to each tire;
if no, determine a turning state of the vehicle, and determine the first adhesion coefficient according to the turning state and the adhesion coefficient of each tire.

In an implementation, the processing module is specifically configured to:
determine a total adhesion coefficient as a sum of adhesion coefficients of each tire;
determine a target force of the vehicle on a horizontal plane according to the tire longitudinal force and the tire lateral force corresponding to each tire; and
determine the first adhesion coefficient as a ratio of the total adhesion coefficient to the target force.

In an implementation, the processing module is specifically configured to:
if the turning state is a left-turn state, determine the first adhesion coefficient as a maximum value of an adhesion coefficient of a right front tire and an adhesion coefficient of a right rear tire;
if the turning state is a right-turn state or a straight driving state, determine the first adhesion coefficient as a maximum value of an adhesion coefficient of a left front tire and an adhesion coefficient of a left rear tire.

In an implementation, the processing module is specifically configured to:
determine a total tire adhesion coefficient of the vehicle according to the tire information of each tire;
determine a third adhesion coefficient as a product of the first adhesion coefficient and a preset number, where the preset number is the number of tires in the vehicle; and
determine the gain coefficient as a ratio of the third adhesion coefficient to the total tire adhesion coefficient.

In an implementation, the acceleration includes a longitudinal acceleration, a lateral acceleration, and a gravitational acceleration; the processing module is specifically configured to:
determine a fourth adhesion coefficient according to the longitudinal acceleration, the lateral acceleration, and the gravitational acceleration; and
determine the second adhesion coefficient as a product of the gain coefficient and the fourth adhesion coefficient.

In an implementation, the processing module is specifically configured to:
determine a first weight value for the first adhesion coefficient and a second weight value for the second adhesion coefficient according to vehicle information of the vehicle and/or the second adhesion coefficient; where the vehicle information includes at least one of the following: an actual yaw angle, a tire slip ratio, and a longitudinal vehicle speed; and
determine the target adhesion coefficient according to the first adhesion coefficient, the second adhesion coefficient, the first weight value, and the second weight value.

In a third aspect, an embodiment of the present application provides a vehicle, comprising:
a processor, and a memory communicatively connected to the processor;
where the memory is configured to store computer-executable instructions; and
the processor is configured to execute the computer-executable instructions stored in the memory to implement the adhesion coefficient determination method according to the first aspect.

In a fourth aspect, an embodiment of the present application provides a computer-readable storage medium storing computer-executable instructions, where the computer-executable instructions, when executed by a processor, are configured to implement the adhesion coefficient determination method according to the first aspect.

In a fifth aspect, an embodiment of the present application provides a computer program product including a computer program, where the computer program, when executed by a processor, implements the adhesion coefficient determination method according to the first aspect.

The embodiments of the present application provide an adhesion coefficient determination method and apparatus, a vehicle, a medium, and a program product. In the method, the vehicle acquires tire information of each tire of the vehicle, and the tire information includes a tire longitudinal force, a tire lateral force, and a tire vertical load of the tire. The vehicle determines a first adhesion coefficient of the vehicle according to the tire information of each tire. The vehicle determines a gain coefficient according to the first adhesion coefficient and the tire information of each tire, and determines a second adhesion coefficient according to the gain coefficient and an acceleration of the vehicle. The vehicle determines a target adhesion coefficient of the vehicle according to the first adhesion coefficient and the second adhesion coefficient. The method of the embodiments of the present application increases the accuracy of determining the adhesion coefficient, enhances the matching degree between the adhesion coefficient and the actual condition of the vehicle, thereby improving the anti-slip control of the vehicle and enhancing the safety of occupants.

Other aspects can be understood after reading and understanding the drawings and the detailed description.

### BRIEF DESCRIPTION OF THE DRAWINGS

The accompanying drawings described below are some embodiments of the present application. A person of ordinary skill in the art can obtain other drawings according to these drawings without creative efforts.
FIG. 1 is a schematic diagram of an application scenario applicable to an embodiment of the present application.
FIG. 2 is a flowchart illustrating an adhesion coefficient determination method according to a first embodiment of the present application.
FIG. 3 is a flowchart illustrating an adhesion coefficient determination method according to a second embodiment of the present application.
FIG. 4 is a flowchart illustrating an adhesion coefficient determination method according to a third embodiment of the present application.
FIG. 5 is a schematic structural diagram of an adhesion coefficient determination apparatus according to an embodiment of the present application.
FIG. 6 is a structural diagram of a vehicle according to an embodiment of the present application.

### DETAILED DESCRIPTION OF THE EMBODIMENTS

The described embodiments are some, but not all, of the embodiments of the present application. Based on the embodiments in the present application, all other embodiments obtained by a person of ordinary skill in the art under the teaching of the embodiments fall within the protection scope of the present application.

In the specification and claims of the present application and the above-mentioned drawings, the terms "first", "second", "third", "fourth", etc. (if present) are used to distinguish similar objects and are not necessarily used to describe a specific order or sequence. It should be understood that the terms so used may be interchanged under appropriate circumstances so that the embodiments of the present application described herein can be implemented in an order other than those illustrated or described herein. Furthermore, the terms "comprise", "have", and any variations thereof are intended to cover non-exclusive inclusion, for example, a process, method, system, product, or device that includes a series of steps or units is not necessarily limited to those explicitly listed steps or units, but may include other steps or units not explicitly listed or inherent to such process, method, product, or device.

An adhesion coefficient of a vehicle plays a key role in implementing longitudinal drive anti-slip control of the vehicle. In the related art, the vehicle typically estimates the adhesion coefficient directly according to a ratio of a longitudinal driving force to a vertical load, so as to perform anti-slip control on the vehicle based on the estimated adhesion coefficient.

However, the method of estimating the adhesion coefficient directly according to the ratio of the longitudinal driving force to the vertical load may suffer from a mismatch between the estimated adhesion coefficient and the actual condition of the vehicle, thereby leading to inaccurate anti-slip control of the vehicle and affecting the safety of occupants.

In view of this, embodiments of the present application provide an adhesion coefficient determination method, which can determine a first adhesion coefficient of a vehicle according to tire information of each tire (a tire longitudinal force, a tire lateral force, and a tire vertical load of the tire); determine a gain coefficient according to the first adhesion coefficient and the tire information of each tire; determine a second adhesion coefficient according to the gain coefficient and an acceleration of the vehicle. After determining the first adhesion coefficient and the second adhesion coefficient, the vehicle fuses the first adhesion coefficient and the second adhesion coefficient to determine a target adhesion coefficient of the vehicle. The above method can increase the accuracy of determining the adhesion coefficient, thereby enhancing the matching degree between the adhesion coefficient and the actual condition of the vehicle, and further improving the anti-slip control of the vehicle.

The principles and features of the embodiments of the present application are described below with reference to the accompanying drawings. The examples are only used to explain the embodiments of the present application, and are not intended to limit the scope of the embodiments of the present application.

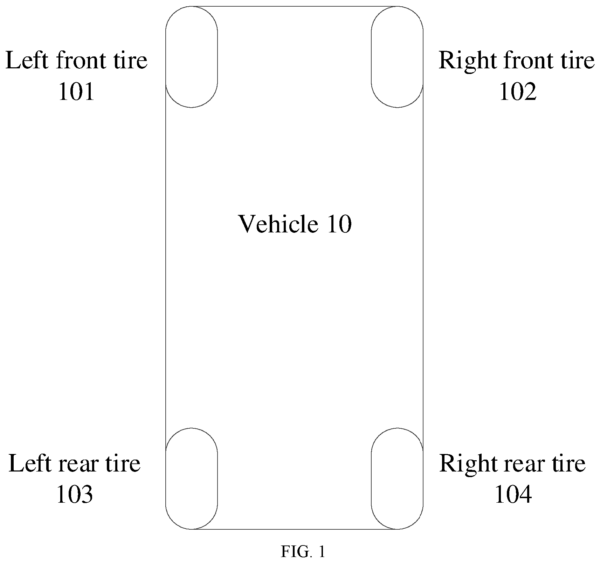

FIG. 1 is a schematic diagram of an application scenario applicable to an embodiment of the present application. The application scenario includes a vehicle 10, which includes a plurality of tires. Exemplarily, FIG. 1 shows four tires: a left front tire 101, a right front tire 102, a left rear tire 103, and a right rear tire 104.

For example, the vehicle 10 includes four tires: the left front tire 101, the right front tire 102, the left rear tire 103, and the right rear tire 104.

The vehicle 10 acquires tire information of the left front tire 101, the right front tire 102, the left rear tire 103, and the right rear tire 104. The tire information includes a tire longitudinal force, a tire lateral force, and a tire vertical load for each tire.

The vehicle 10 determines a first adhesion coefficient of the vehicle 10 according to the tire information of the left front tire 101, the tire information of the right front tire 102, the tire information of the left rear tire 103, and the tire information of the right rear tire 104.

The vehicle 10 determines a gain coefficient according to the first adhesion coefficient, the tire information of the left front tire 101, the tire information of the right front tire 102, the tire information of the left rear tire 103, and the tire information of the right rear tire 104.

The vehicle 10 determines a second adhesion coefficient according to the gain coefficient and an acceleration of the vehicle.

The vehicle 10 determines a target adhesion coefficient of the vehicle 10 according to the first adhesion coefficient and the second adhesion coefficient.

The technical solution of the present application is described in detail below with reference to specific embodiments. It should be noted that the following specific embodiments can be combined with each other, and the same or similar concepts or processes may not be repeated in some embodiments.

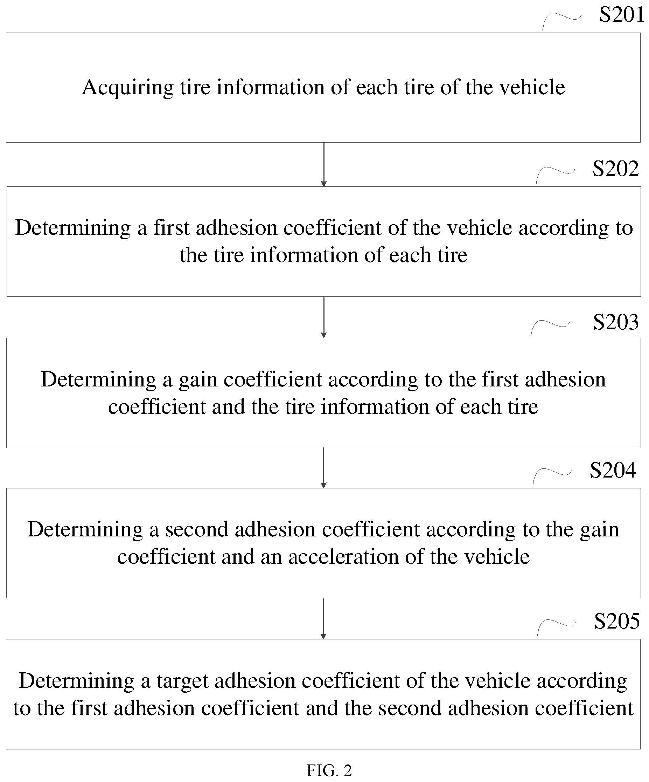

FIG. 2 is a flowchart illustrating an adhesion coefficient determination method according to a first embodiment of the present application. Referring to FIG. 2, the method specifically includes the following steps.

S201: Acquiring tire information of each tire of the vehicle.

In the present embodiment, the vehicle can acquire tire information of each tire of the vehicle, and the tire information includes a tire longitudinal force, a tire lateral force, and a tire vertical load for each tire.

S202: Determining a first adhesion coefficient of the vehicle according to the tire information of each tire.

In the present embodiment, the vehicle can determine the first adhesion coefficient of the vehicle according to the tire information of each tire.

Specifically, for any tire, the vehicle can determine an adhesion coefficient of the tire according to tire information of the tire.

For example, the vehicle includes four tires: the left front tire, the right front tire, the left rear tire, and the right rear tire. The vehicle can determine the adhesion coefficient of the tire according to the tire information of the tire using the following formula: $MueUtilWhl \left(k\right) = \frac{\sqrt{Fx_N {\left(k\right)}^{2} + Fy_N {\left(k\right)}^{2}}}{Fz_N \left(k\right)}$ where MueUtilWhl(k) is the adhesion coefficient of the tire, Fx_N(k) is the tire longitudinal force, Fy_N(k) is the tire lateral force, and Fz_N(k) is the tire vertical load. k = 1 represents the left front tire, k = 2 represents the right front tire, k = 3 represents the left rear tire, and k = 4 represents the right rear tire.

After calculating each adhesion coefficient of the vehicle, the vehicle can determine the first adhesion coefficient according to the adhesion coefficient of each tire.

S203: Determining a gain coefficient according to the first adhesion coefficient and the tire information of each tire.

In the present embodiment, the vehicle can determine the gain coefficient according to the first adhesion coefficient and the tire information of each tire.

Specifically, the vehicle can determine a total tire adhesion coefficient of the vehicle according to the tire information of each tire (the tire longitudinal force, tire lateral force, and tire vertical load of the tire).

The vehicle can determine a third adhesion coefficient as a product of the first adhesion coefficient and a preset number. The preset number is the number of tires in the vehicle.

The vehicle determines the gain coefficient as a ratio of the third adhesion coefficient to the total tire adhesion coefficient.

For example, the vehicle includes four tires: the left front tire, the right front tire, the left rear tire, and the right rear tire. The vehicle can determine the gain coefficient according to the first adhesion coefficient and the tire information of each tire using the following formula: $Gain = \frac{MueUtilFromTqMdl ∗ 4}{{\sum }_{k = 1}^{4} \frac{\sqrt{Fx _ N {\left(k\right)}^{2} + Fy _ N {\left(k\right)}^{2}}}{Fz _ N \left(k\right)}}$ where Gain is the gain coefficient. Fx_N(k) is the tire longitudinal force, Fy_N(k) is the tire lateral force, and Fz_N(k) is the tire vertical load. k = 1 represents the left front tire, k = 2 represents the right front tire, k = 3 represents the left rear tire, and k = 4 represents the right rear tire. MueUtilFromTqMdl represents the first adhesion coefficient.

S204: Determining a second adhesion coefficient according to the gain coefficient and an acceleration of the vehicle.

In the present embodiment, the vehicle can determine the second adhesion coefficient according to the gain coefficient and the acceleration of the vehicle. The acceleration includes a longitudinal acceleration, a lateral acceleration, and a gravitational acceleration.

Specifically, the vehicle can determine a fourth adhesion coefficient according to the longitudinal acceleration, the lateral acceleration, and the gravitational acceleration. The vehicle can determine the second adhesion coefficient as a product of the gain coefficient and the fourth adhesion coefficient.

The vehicle can determine the second adhesion coefficient based on the following formula: $MueUtilWhlIMU = Gain ∗ \frac{\sqrt{{{a}_{x}}^{2} + {{a}_{y}}^{2}}}{g}$
where MueUtilWhlIMU is the second adhesion coefficient;
Gain is the gain coefficient;
aₓ is the longitudinal acceleration, and a_{y} is the lateral acceleration; it should be noted that aₓ and a_{y} are detected by an inertial measurement unit (inertial measurement unit, IMU) motion sensor; and
$\frac{\sqrt{{{a}_{x}}^{2} + {{a}_{y}}^{2}}}{g}$ is the fourth adhesion coefficient.

S205: Determining a target adhesion coefficient of the vehicle according to the first adhesion coefficient and the second adhesion coefficient.

In the present embodiment, after determining the first adhesion coefficient and the second adhesion coefficient, the vehicle can determine the target coefficient of the vehicle according to the first adhesion coefficient and the second adhesion coefficient.

In an implementation, the vehicle can determine the target coefficient of the vehicle as a sum of (i) the product of the first adhesion coefficient and a first preset weight value and (ii) the product of the second adhesion coefficient and a second preset weight coefficient.

In an implementation, the vehicle can determine a first weight value for the first adhesion coefficient and a second weight value for the second adhesion coefficient according to the acquired vehicle information of the vehicle and/or the second adhesion coefficient. The vehicle can determine the target adhesion coefficient according to the first adhesion coefficient, the second adhesion coefficient, the first weight value, and the second weight value.

Beneficial effects of the present embodiment: In the present embodiment, the vehicle can determine the first adhesion coefficient of the vehicle according to the tire information of each tire (the tire longitudinal force, tire lateral force, and tire vertical load of the tire); can determine the gain coefficient according to the first adhesion coefficient and the tire information of each tire; and can determine the second adhesion coefficient according to the gain coefficient and the acceleration of the vehicle. After determining the first adhesion coefficient and the second adhesion coefficient, the vehicle fuses the first adhesion coefficient and the second adhesion coefficient to determine the target adhesion coefficient of the vehicle. The above method can increase the accuracy of determining the adhesion coefficient, thereby enhancing the matching degree between the adhesion coefficient and the actual condition of the vehicle, and further improving the anti-slip control of the vehicle.

The process of determining the first adhesion coefficient of the vehicle according to the tire information of each tire by the vehicle is described in detail below with reference to a second method embodiment.

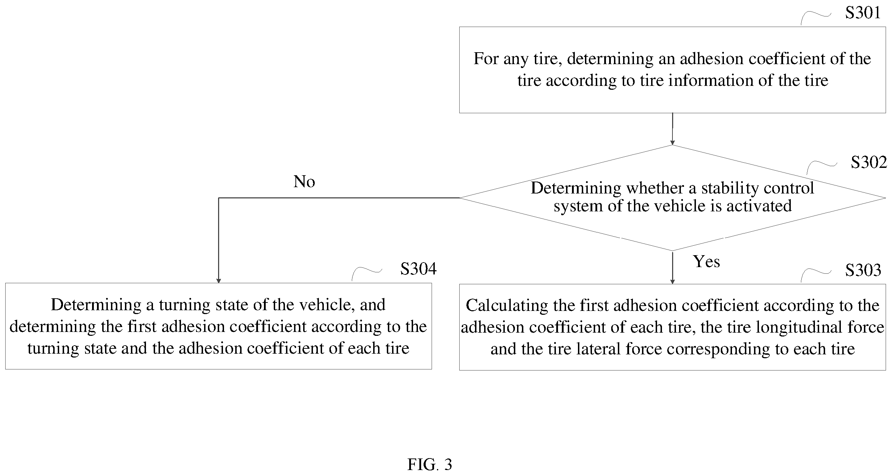

FIG. 3 is a flowchart illustrating an adhesion coefficient determination method according to a second embodiment of the present application. Referring to FIG. 3, the method specifically includes the following steps.

S301: For any tire, determining an adhesion coefficient of the tire according to tire information of the tire.

In the present embodiment, for any tire, the vehicle can determine the adhesion coefficient of the tire according to the tire information of that tire.

For example, the vehicle includes four tires: the left front tire, the right front tire, the left rear tire, and the right rear tire. The vehicle can determine the adhesion coefficient of the tire according to the tire information of the tire using the following formula: $MueUtilWhl \left(k\right) = \frac{\sqrt{Fx_N {\left(k\right)}^{2} + Fy_N {\left(k\right)}^{2}}}{Fz_N \left(k\right)}$ where MueUtilWhl(k) is the adhesion coefficient of the tire, Fx_N(k) is the tire longitudinal force, Fy_N(k) is the tire lateral force, and Fz_N(k) is the tire vertical load. k = 1 represents the left front tire, k = 2 represents the right front tire, k = 3 represents the left rear tire, and k = 4 represents the right rear tire.

S302: Determining whether a stability control system of the vehicle is activated.

In the present embodiment, the vehicle can determine whether the stability control system of the vehicle is activated.

If yes, execute S303; and
if no, execute S304.

In an implementation, the vehicle determines that the stability control system of the vehicle is activated when it identifies that a brake flag of a tire (wheel) is set and a braking torque of the tire (wheel) is greater than zero.

In an implementation, the vehicle determines that the stability control system of the vehicle is activated when it identifies that a control flag of an anti-lock braking system for a tire (wheel) is set and a braking torque of the tire (wheel) is greater than zero.

In an implementation, the vehicle determines that the stability control system of the vehicle is activated when it identifies that there is a tire (wheel) whose identifier corresponds to a tire (wheel) identifier in a torque increase or decrease request, and a slip ratio of that tire (wheel) is greater than zero.

S303: Calculating the first adhesion coefficient according to the adhesion coefficient of each tire, the tire longitudinal force and the tire lateral force corresponding to each tire.

In the present embodiment, when determining that the stability control system of the vehicle is activated, the vehicle calculates the first adhesion coefficient according to the adhesion coefficient of each tire, the tire longitudinal force and the tire lateral force corresponding to each tire.

For example, the vehicle includes four tires: the left front tire, the right front tire, the left rear tire, and the right rear tire. The vehicle can calculate the first adhesion coefficient according to the adhesion coefficient of each tire, the tire longitudinal force and the tire lateral force corresponding to each tire using the following formula: $MueUtilFromTqMdl = \frac{{\sum }_{k = 1}^{4} \frac{Fx _ N {\left(k\right)}^{2} + Fy _ N {\left(k\right)}^{2}}{Fz _ N \left(k\right)}}{{\sum }_{k = 1}^{4} \sqrt{Fx _ N {\left(k\right)}^{2} + Fy _ N {\left(k\right)}^{2}}}$ where MueUtilFromTqMdl is the first adhesion coefficient.
Fx_N(k) is the tire longitudinal force, Fy_N(k) is the tire lateral force, and Fz_N(k) is the tire vertical load.
k = 1 represents the left front tire, k = 2 represents the right front tire, k = 3 represents the left rear tire, and k = 4 represents the right rear tire.
$\frac{Fx_N {\left(k\right)}^{2} + Fy_N {\left(k\right)}^{2}}{Fz_N \left(k\right)}$ represents the adhesion coefficient of one tire.

S304: Determining a turning state of the vehicle, and determining the first adhesion coefficient according to the turning state and the adhesion coefficient of each tire.

In the present embodiment, when determining that the stability control system of the vehicle is not activated, the vehicle determines the turning state of the vehicle. The turning state includes a left-turn state, a right-turn state, and a straight driving state.

The vehicle can determine the first adhesion coefficient according to the turning state and the adhesion coefficient of each tire.

Specifically, if the turning state is the left-turn state, the first adhesion coefficient is determined as a maximum value of the adhesion coefficient of the right front tire and the adhesion coefficient of the right rear tire.

For example, the vehicle includes four tires: the left front tire, the right front tire, the left rear tire, and the right rear tire. The vehicle can determine the first adhesion coefficient as the maximum value of the adhesion coefficient of the right front tire and the adhesion coefficient of the right rear tire based on the following formula: $MueUtilFromTqMdl = max \left(MueUtilWhl\left(2\right),MueUtilWhl\left(4\right)\right)$ where MueUtilFromTqMdl is the first adhesion coefficient, MueUtilWhl(2) is the adhesion coefficient of the right front tire, and MueUtilWhl(4) is the adhesion coefficient of the right rear tire.

If the turning state is the right-turn state or the straight driving state, the first adhesion coefficient is determined as a maximum value of the adhesion coefficient of the left front tire and the adhesion coefficient of the left rear tire.

For example, the vehicle includes four tires: the left front tire, the right front tire, the left rear tire, and the right rear tire. The vehicle can determine the first adhesion coefficient as the maximum value of the adhesion coefficient of the right front tire and the adhesion coefficient of the right rear tire based on the following formula: $MueUtilFromTqMdl = max \left(MueUtilWhl\left(1\right),MueUtilWhl\left(3\right)\right)$ where MueUtilFromTqMdl is the first adhesion coefficient, MueUtilWhl(1) is the adhesion coefficient of the left front tire, and MueUtilWhl(3) is the adhesion coefficient of the left rear tire.

Beneficial effects of the present embodiment: In the present embodiment, when determining that the stability control system of the vehicle is activated, the vehicle can calculate the first adhesion coefficient according to the adhesion coefficient of each tire, the tire longitudinal force and the tire lateral force corresponding to each tire. When determining that the stability control system of the vehicle is not activated, the vehicle can determine the turning state of the vehicle and determine the first adhesion coefficient according to the turning state and the adhesion coefficient of each tire. By identifying whether the stability control system of the vehicle is activated, the first adhesion coefficient is determined using an appropriate manner, thereby enhancing the accuracy of determining the first adhesion coefficient, and further improving the accuracy of determining the target adhesion coefficient of the vehicle based on the first adhesion coefficient.

The process of determining the target adhesion coefficient of the vehicle according to the first adhesion coefficient and the second adhesion coefficient by the vehicle is described in detail below with reference to a third method embodiment.

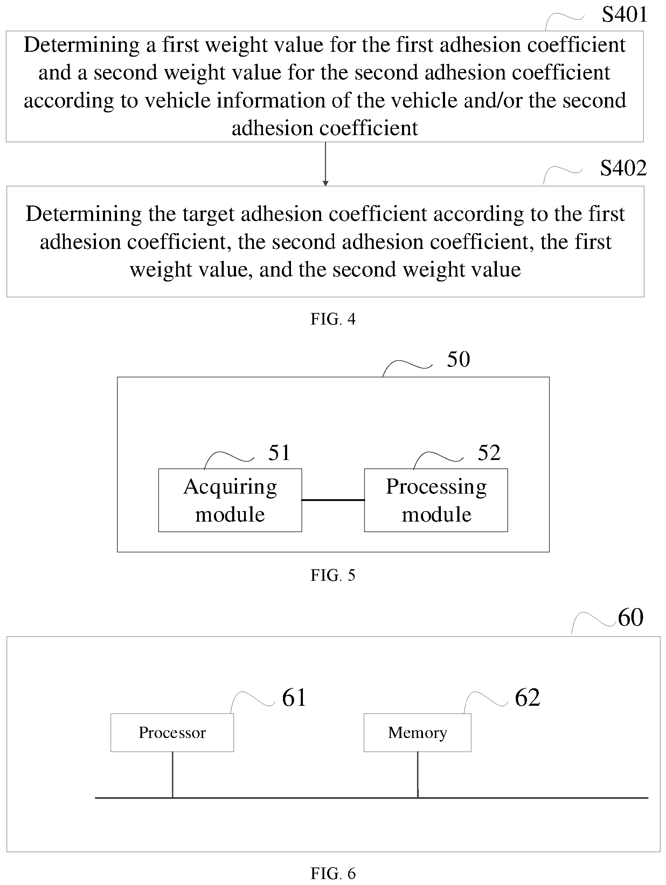

FIG. 4 is a flowchart illustrating an adhesion coefficient determination method according to a third embodiment of the present application. Referring to FIG. 4, the method specifically includes the following steps.

S401: Determining a first weight value for the first adhesion coefficient and a second weight value for the second adhesion coefficient according to vehicle information of the vehicle and/or the second adhesion coefficient.

In the present embodiment, the vehicle can determine the first weight value for the first adhesion coefficient and the second weight value for the second adhesion coefficient according to vehicle information of the vehicle and/or the second adhesion coefficient. The vehicle information includes at least one of the following: an actual yaw angle, a tire slip ratio, and a longitudinal vehicle speed.

For example, the vehicle determines the first weight value for the first adhesion coefficient and the second weight value for the second adhesion coefficient according to the actual yaw angle, the tire slip ratio, the longitudinal vehicle speed, and the second adhesion coefficient.

The vehicle can determine an error between the actual yaw angle and a reference value based on the actual yaw angle, and query a table stored in the vehicle according to the error between the actual yaw angle and the reference value to determine a first correction weight coefficient.

The vehicle can determine a variance of a rate of change of the tire slip ratio based on the tire slip ratio, and query a table stored in the vehicle according to the variance of the rate of change of the tire slip ratio to determine a second correction weight coefficient.

The vehicle can query a table stored in the vehicle according to the second adhesion coefficient to determine a third correction weight coefficient.

The vehicle can query a table stored in the vehicle according to the longitudinal vehicle speed to determine a fourth correction weight coefficient.

The vehicle can determine the first weight value according to the first correction weight coefficient, the second correction weight coefficient, the third correction weight coefficient, and the fourth correction weight coefficient using the following formula: ${λ}_{1} = Factor 1 ∗ Factor 2 ∗ Factor 3 ∗ Factor 4$ where λ₁ is the first weight value, Factor1 is the first correction weight coefficient, Factor2 is the second correction weight coefficient, Factor3 is the third correction weight coefficient, and Factor4 is the fourth correction weight coefficient.

After determining the first weight value, the vehicle can determine the second weight value based on the following formula: ${λ}_{1} = 1 - {λ}_{2}$ where *λ*₁ is the first weight value, and λ₂ is the first weight value.

S402: Determining the target adhesion coefficient according to the first adhesion coefficient, the second adhesion coefficient, the first weight value, and the second weight value.

In the present embodiment, the vehicle can determine the target adhesion coefficient according to the first adhesion coefficient, the second adhesion coefficient, the first weight value, and the second weight value.

Specifically, the vehicle can determine the target adhesion coefficient based on the following formula: $MueUtilizedInst = {λ}_{2} ∗ MueUtilWhlIMU + {λ}_{1} ∗ MueUtilFromTqMdl$ where λ₁ is the first weight value, λ₂ is the first weight value, MueUtilFromTqMdl is the first adhesion coefficient, and MueUtilWhlIMU is the second adhesion coefficient.

Beneficial effects of the present embodiment: The vehicle can determine the first weight value and the second weight value according to the vehicle information and/or the second adhesion coefficient, and then appropriately fuse the first adhesion coefficient and the second adhesion coefficient according to the first weight value and the second weight value, thereby increasing the accuracy of determining the target adhesion coefficient of the vehicle, enhancing the matching degree between the target adhesion coefficient and the actual condition of the vehicle, and further improving the control effect of the vehicle.

The following is an apparatus embodiment of the present application, which can be used to perform the method embodiments of the present application. For details not disclosed in the apparatus embodiment of the present application, reference is made to the method embodiments of the present application.

FIG. 5 is a schematic structural diagram of an adhesion coefficient determination apparatus according to an embodiment of the present application. As shown in FIG. 5, the adhesion coefficient determination apparatus 50 includes an acquiring module 51 and a processing module 52.

The acquiring module 51 is configured to acquire tire information of each tire of a vehicle, where the tire information includes a tire longitudinal force, a tire lateral force, and a tire vertical load of the tire.

The processing module 52 is configured to determine a first adhesion coefficient of the vehicle according to the tire information of each tire.

The processing module 52 is further configured to determine a gain coefficient according to the first adhesion coefficient and the tire information of each tire.

The processing module 52 is further configured to determine a second adhesion coefficient according to the gain coefficient and an acceleration of the vehicle.

The processing module 52 is further configured to determine a target adhesion coefficient of the vehicle according to the first adhesion coefficient and the second adhesion coefficient.

The adhesion coefficient determination apparatus in the embodiment of the present application can perform the technical solutions shown in the above method embodiments, and its implementation principle and beneficial effects are similar to those of the method embodiments, and will not be repeated here.

In an implementation, the processing module 52 is specifically configured to:
for any tire, determine an adhesion coefficient of the tire according to tire information of the tire; and
determine the first adhesion coefficient according to the adhesion coefficient of each tire.

The adhesion coefficient determination apparatus in the embodiment of the present application can perform the technical solutions shown in the above method embodiments, and its implementation principle and beneficial effects are similar to those of the method embodiments, and will not be repeated here.

In an implementation, the processing module 52 is specifically configured to:
determine whether a stability control system of the vehicle is activated; and
if yes, calculate the first adhesion coefficient according to the adhesion coefficient of each tire, the tire longitudinal force and the tire lateral force corresponding to each tire;
if no, determine a turning state of the vehicle, and determine the first adhesion coefficient according to the turning state and the adhesion coefficient of each tire.

The adhesion coefficient determination apparatus in the embodiment of the present application can perform the technical solutions shown in the above method embodiments, and its implementation principle and beneficial effects are similar to those of the method embodiments, and will not be repeated here.

In an implementation, the processing module 52 is specifically configured to:
determine a total adhesion coefficient as a sum of adhesion coefficients of each tire;
determine a target force of the vehicle on a horizontal plane according to the tire longitudinal force and the tire lateral force corresponding to each tire; and
determine the first adhesion coefficient as a ratio of the total adhesion coefficient to the target force.

The adhesion coefficient determination apparatus in the embodiment of the present application can perform the technical solutions shown in the above method embodiments, and its implementation principle and beneficial effects are similar to those of the method embodiments, and will not be repeated here.

In an implementation, the processing module 52 is specifically configured to:
determine the first adhesion coefficient as a maximum value of an adhesion coefficient of a right front tire and an adhesion coefficient of a right rear tire, if the turning state is a left-turn state; and
determine the first adhesion coefficient as a maximum value of an adhesion coefficient of a left front tire and an adhesion coefficient of a left rear tire, if the turning state is a right-turn state or a straight driving state.

The adhesion coefficient determination apparatus in the embodiment of the present application can perform the technical solutions shown in the above method embodiments, and its implementation principle and beneficial effects are similar to those of the method embodiments, and will not be repeated here.

In an implementation, the processing module 52 is specifically configured to:
determine a total tire adhesion coefficient of the vehicle according to the tire information of each tire;
determine a third adhesion coefficient as a product of the first adhesion coefficient and a preset number, where the preset number is the number of tires in the vehicle; and
determine the gain coefficient as a ratio of the third adhesion coefficient to the total tire adhesion coefficient.

The adhesion coefficient determination apparatus in the embodiment of the present application can perform the technical solutions shown in the above method embodiments, and its implementation principle and beneficial effects are similar to those of the method embodiments, and will not be repeated here.

In an implementation, the acceleration includes a longitudinal acceleration, a lateral acceleration, and a gravitational acceleration; the processing module 52 is specifically configured to:
determine a fourth adhesion coefficient according to the longitudinal acceleration, the lateral acceleration, and the gravitational acceleration; and
determine the second adhesion coefficient as a product of the gain coefficient and the fourth adhesion coefficient.

The adhesion coefficient determination apparatus in the embodiment of the present application can perform the technical solutions shown in the above method embodiments, and its implementation principle and beneficial effects are similar to those of the method embodiments, and will not be repeated here.

In an implementation, the processing module 52 is specifically configured to:
determine a first weight value for the first adhesion coefficient and a second weight value for the second adhesion coefficient according to vehicle information of the vehicle and/or the second adhesion coefficient, where the vehicle information includes at least one of the following: an actual yaw angle, a tire slip ratio, and a longitudinal vehicle speed; and
determine the target adhesion coefficient according to the first adhesion coefficient, the second adhesion coefficient, the first weight value, and the second weight value.

The adhesion coefficient determination apparatus in the embodiment of the present application can perform the technical solutions shown in the above method embodiments, and its implementation principle and beneficial effects are similar to those of the method embodiments, and will not be repeated here.

FIG. 6 is a structural diagram of a vehicle according to an embodiment of the present application. As shown in FIG. 6, the vehicle 60 includes a processor 61 and a memory 62. The processor 61 is communicatively connected to the memory 62 which is configured to store computer-executable instructions. The processor 61 is configured to execute the computer-executable instructions stored in the memory 62 to perform the technical solution in any of the preceding method embodiments.

Optionally, the memory 62 may be either independent or integrated with the processor 61. Optionally, when the memory 62 is a device independent of the processor 61, the vehicle 60 can further include a bus configured to connect the above-mentioned devices.

The vehicle is configured to perform the technical solution in any of the preceding method embodiments, and its implementation principle and technical effects are similar to those of the method embodiments, and will not be repeated here.

An embodiment of the present application further provides a computer-readable storage medium storing the computer-executable instructions, where the computer-executable instructions, when executed by a processor, are configured to implement the technical solution in any of the preceding method embodiments.

An embodiment of the present application further provides a computer program product including a computer program, where the computer program, when executed by the processor, is configured to implement the technical solution in the preceding method embodiments.

A person of ordinary skill in the art can understand that all or part of the steps in the above methods can be implemented by a program instructing relevant hardware (e.g., a processor), and the program can be stored in a computer-readable storage medium, such as a read-only memory, a magnetic disk, or an optical disk. Optionally, all or part of the steps in the above embodiments can also be implemented using one or more integrated circuits. Correspondingly, each module/unit in the above embodiments can be implemented in the form of hardware, for example, an integrated circuit may be used to implement its corresponding functions; or each module/unit in the above embodiments can be implemented in the form of a software function module, for example, a processor may execute programs/instructions stored in a memory to implement its corresponding functions. The present application is not limited to any specific form of combination of hardware and software.

It should be noted that each of the above embodiments is only used to illustrate the technical solutions of the present application, and is not intended to limit the same. Although the present application has been described in detail with reference to each of the foregoing embodiments, a person of ordinary skill in the art should understand that they can still modify the technical solutions described in each of the foregoing embodiments, or replace some or all of the technical features thereof with equivalents. However, these modifications or replacements do not cause the essence of corresponding technical solutions to depart from the scope of the technical solutions of each embodiment of the present application.

## Claims

1. An adhesion coefficient determination method, applied to a vehicle, and the method comprises:
acquiring tire information of each tire of the vehicle, wherein the tire information comprises a tire longitudinal force, a tire lateral force, and a tire vertical load of the tire;
determining a first adhesion coefficient of the vehicle according to the tire information of each tire;
determining a gain coefficient according to the first adhesion coefficient and the tire information of each tire;
determining a second adhesion coefficient according to the gain coefficient and an acceleration of the vehicle; and
determining a target adhesion coefficient of the vehicle according to the first adhesion coefficient and the second adhesion coefficient.

2. The method according to claim 1, wherein
for any tire, determining an adhesion coefficient of the tire according to tire information of the tire; and
determining the first adhesion coefficient according to an adhesion coefficient of each tire.

3. The method according to claim 2, wherein
determining whether a stability control system of the vehicle is activated; and
if yes, calculating the first adhesion coefficient according to the adhesion coefficient of each tire, the tire longitudinal force and the tire lateral force corresponding to each tire;
if no, determining a turning state of the vehicle, and determining the first adhesion coefficient according to the turning state and the adhesion coefficient of each tire.

4. The method according to claim 3, wherein
determining a total adhesion coefficient as a sum of adhesion coefficients of each tire;
determining a target force of the vehicle on a horizontal plane according to the tire longitudinal force and the tire lateral force corresponding to each tire; and
determining the first adhesion coefficient as a ratio of the total adhesion coefficient to the target force.

5. The method according to claim 3, wherein
when the turning state is a left-turn state, determining the first adhesion coefficient as a maximum value of an adhesion coefficient of a right front tire and an adhesion coefficient of a right rear tire;
when the turning state is a right-turn state or a straight driving state, determining the first adhesion coefficient as a maximum value of an adhesion coefficient of a left front tire and an adhesion coefficient of a left rear tire.

6. The method according to any one of claims 1 to 5, wherein
determining a total tire adhesion coefficient of the vehicle according to the tire information of each tire;
determining a third adhesion coefficient as a product of the first adhesion coefficient and a preset number, wherein the preset number is a number of tires in the vehicle; and
determining the gain coefficient as a ratio of the third adhesion coefficient to the total tire adhesion coefficient.

7. The method according to any one of claims 1 to 6, wherein the acceleration comprises a longitudinal acceleration, a lateral acceleration, and a gravitational acceleration;
wherein determining a fourth adhesion coefficient according to the longitudinal acceleration, the lateral acceleration, and the gravitational acceleration; and
determining the second adhesion coefficient as a product of the gain coefficient and the fourth adhesion coefficient.

8. The method according to any one of claims 1 to 7, wherein
determining a first weight value for the first adhesion coefficient and a second weight value for the second adhesion coefficient according to vehicle information of the vehicle and/or the second adhesion coefficient; wherein the vehicle information comprises at least one of the following: an actual yaw angle, a tire slip ratio, and a longitudinal vehicle speed; and
determining the target adhesion coefficient according to the first adhesion coefficient, the second adhesion coefficient, the first weight value, and the second weight value.

9. An adhesion coefficient determination apparatus, comprising:
an acquiring module, configured to acquire tire information of each tire of a vehicle, wherein the tire information comprises a tire longitudinal force, a tire lateral force, and a tire vertical load of the tire;
a processing module, configured to determine a first adhesion coefficient of the vehicle according to the tire information of each tire;
wherein the processing module is further configured to determine a gain coefficient according to the first adhesion coefficient and the tire information of each tire;
the processing module is further configured to determine a second adhesion coefficient according to the gain coefficient and an acceleration of the vehicle; and
the processing module is further configured to determine a target adhesion coefficient of the vehicle according to the first adhesion coefficient and the second adhesion coefficient.

10. A vehicle, comprising:
a processor and a memory communicatively connected to the processor;
wherein the memory is configured to store computer-executable instructions; and
the processor is configured to execute the computer-executable instructions stored in the memory to implement the adhesion coefficient determination method according to any one of claims 1 to 8.

11. A computer-readable storage medium storing computer-executable instructions, wherein the computer-executable instructions, when executed by a processor, are configured to implement the adhesion coefficient determination method according to any one of claims 1 to 8.

12. A computer program product comprising a computer program, wherein the computer program, when executed by a processor, implements the adhesion coefficient determination method according to any one of claims 1 to 8.
